# EUROPÄISCHE PATENTSCHRIFT

(11) **EP 2 456 607 B1**
(45) Veröffentlichungstag und Bekanntmachung des Hinweises auf die Patenterteilung: **03.04.2013**
(21) Anmeldenummer: 10728721.1
(22) Anmeldetag: 08.07.2010
(51) Int. Cl.: B29C 45/68

(54) **SCHLIESSEINHEIT FÜR EINE SPRITZGIESSMASCHINE**
CLAMPING UNIT FOR AN INJECTION MOLDING MACHINE
UNITÉ DE FERMETURE POUR PRESSE D'INJECTION

(30) Priorität: 22.07.2009 DE 102009034176
(43) Veröffentlichungstag der Anmeldung: 30.05.2012
(73) Patentinhaber: KraussMaffei Technologies GmbH, 80997 München (DE)
(72) Erfinder: WOHLRAB, Walter, 91781 Weißenburg (DE)
(74) Vertreter: Wilhelm, Ludwig
(86) Internationale Anmeldenummer: PCT/EP2010/059792
(87) Internationale Veröffentlichungsnummer: WO 2011/009734

(56) Entgegenhaltungen:
- DE-A1-102004 029 269
- JP-A- 4 364 917

## Beschreibung

Die vorliegende Erfindung betrifft eine Schließeinheit für eine Spritzgießmaschine gemäß dem Oberbegriff des Anspruchs 1.

Schließeinheiten dienen bei Spritzgießmaschinen zur Aufnahme von zumeist zweiteilig ausgebildeten Formwerkzeugen, in denen im geschlossenen Zustand eine in einer Plastifiziereinheit hergestellte Kunststoffschmelze zur Ausbildung eines Produktes eingespritzt wird. Dabei müssen die beiden Formwerkzeuge während des Einspritzvorganges mit einem großen Druck zusammengehalten werden. Nach dem Abkühlen und Aushärten des Kunststoffproduktes wird die Schließeinheit und damit das Formwerkzeug geöffnet, um das so hergestellte Produkt entnehmen zu können (DE 10 2004 029 269 A1, WO 2005/115718 A1).

Die Schließeinheiten werden generell in sogenannte Zweiplattenschließeinheiten mit einer beweglichen und einer festen Aufspannplatte, auf denen die Formwerkzeuge aufgespannt sind, sowie Dreiplattenschließeinheiten mit einer festen und einer beweglichen Aufspannplatte sowie einer Abstützplatte eingeteilt.

Bei der letztgenannten Gattung wirkt in der Regel zwischen der Abstützplatte und der beweglichen Aufspannplatte eine Antriebsvorrichtung, die oftmals zum Öffnen und Schließen der Schließeinheit, in jedem Fall aber zur Aufbringung des Schließdrucks ausgebildet ist. Dabei unterscheiden sich die beiden Betriebsphasen des Öffnens und Schließens einerseits und des Aufbringens des Schließdrucks andererseits in ihrem Anforderungsprofil erheblich. Beim Öffnen und Schließen sollte die bewegliche Aufspannplatte möglichst schnell verfahren werden, wobei lediglich die Massen-Trägheitsmomente und Reibungen überwunden werden müssen. Diese Verfahrbewegung erfolgt oftmals auch über einen längeren Weg. Beim Aufbringen der Schließkraft muss in der Regel kaum ein Weg überwunden werden. Hier geht es darum, enorme Schließkräfte aufzubringen, um die Formwerkzeuge mit der geforderten Kraft aufeinanderdrücken zu können.

Gerade bei Schließeinheiten für große Teile, für die eine erhebliche Schließkraft erforderlich ist, war es bislang üblich, rein hydraulische Antriebe zu verwenden.

Bei Schließeinheiten für kleinere Schließkräfte (kleinere Maschinen) haben sich gerade in der letzten Zeit jedoch anstelle hydraulischer Antriebe elektrische Antriebe durchgesetzt, die einige Vorteile aufweisen. Zum einen sind signifikante Energieeinsparungen möglich. Diese Einsparungen sind gerade in der heutigen Zeit der hohen Energiekosten für den Betrieb der Maschine von besonderer Bedeutung. Allerdings nehmen die Anschaffungskosten für elektromotorische Antriebe mit deren Größe überproportional zu. Dies hat dazu geführt, dass sich bis heute insbesondere bei größeren Maschinen die Elektromotore nicht durchsetzen konnten, da übermäßig hohe Kosten in Kauf genommen werden müssten.

Aufgabe der vorliegenden Erfindung ist es, eine Schließeinheit anzugeben, die sich insbesondere für große Schließkräfte eignet, energieeffizient betreibbar, schnell betätigbar und günstig im Aufbau ist.

Diese Aufgabe wird durch die im Anspruch 1 angegebenen Merkmale gelöst.

Ein Kerngedanke der vorliegenden Erfindung ist dabei darin zu sehen, dass zumindest ein wesentlicher Teil der Öffnungs- und Schließbetätigung bei der Schließeinheit mittels des Elektromotors bewerkstelligt wird. Dabei dient der Elektromotor insbesondere dazu, die Schließeinheit zu öffnen und zu schließen, was er energieeffizient und rasch bewerkstelligen kann. Bei dieser Betriebsphase lässt sich eine gute Energieeffizienz vorzugsweise dann erreichen, wenn die Bremsenergien beim Abbremsen der beweglichen Aufspannplatte über den Elektromotor wieder in das Netz zurückgespeist werden.

Der Elektromotor dient auch dazu, zumindest einen Teil, eventuell einen Großteil der Schließkraft aufzubringen. Zusätzlich zum Elektromotor ist allerdings parallel ein gesonderter hydraulischer Antrieb vorgesehen, der gesondert an einem Pleuel des Antriebs der Schließeinheit angelenkt ist und parallel und unabhängig zum Elektromotor evtl. zum zeitweisen Öffnen und Schließen, insbesondere aber zum gemeinsamen Aufbringen der Schließkraft wirkt.

Gemäß einer besonderen Ausführungsform der vorliegenden Erfindung dient der hydraulische Antrieb ausschließlich zur Unterstützung beim Aufbau der Schließkraft. Damit kann man den Elektromotor so auslegen, dass er in einem hohen Wirkungsgradbereich arbeitet und beispielsweise 30 - 80 % der Schließkraft aufbringt. Der Rest wird vom hydraulischen Antrieb geleistet.

Damit kann man die wesentlichen Vorteile des Elektromotors, nämlich der raschen Betätigung der Schließeinheit sowie der Energieeffizienz nutzen. Überdies ist es aber möglich, auf einfache Weise auch hohe Schließkräfte zu realisieren. Gemäß der vorliegenden Erfindung ist es nicht notwendig Umschalt- oder Verriegelungsmechaniken beim Zuschalten des hydraulischen Antriebs einzusetzen.

Überdies ist die erfindungsgemäße Vorrichtung einfach aufgebaut, weil sich beispielsweise für den hydraulischen Antrieb einfache und marktübliche Kolbenzylindersysteme verwenden lassen, die günstig zu beziehen sind. Diese Kolbenzylindersysteme können vorzugsweise doppelt wirkend ausgebildet sein, so dass sie z. B. einerseits zum Aufbringen der Schließkraft, andererseits aber auch unterstützend zum Aufreißen der Schließeinheit beim Start des Öffnungsvorganges verwendet werden können.

Vorzugsweise ist der Hydraulikzylinder über ein einfaches Ventil mit einer Hydraulikversorgung verbunden. Bei diesem Ventil kann es sich um ein einfaches Schaltventil handeln, welches wahlweise den doppeltwirkenden Kolben in beide Richtungen beaufschlagen oder ihn "auf Leerlauf" stellen kann. Bei einer solchen Leerlaufstellung würde der Kolben frei hin und her geschoben werden können, wobei lediglich geringste Hydraulikfluidmengen (z.B. im Bereich von 0,5 bis 3 Liter) verschoben werden müssten.

Zur Versorgung des Hydraulikzylinders mit Druckfluid kann dieser über das vorgenannte Schaltventil mit einer entsprechenden Hydraulikquelle verbunden sein. Vorzugsweise eignet sich dabei in besonderer Weise ein bereits bei der Spritzgießmaschine vorhandenes hydraulisches Antriebssystem mit einem Akkumulator, in dem ein Hydraulikfluid mit einem bestimmten Druck vorgehalten wird. Solche Akkurnufatorsysteme sind insbesondere bei sogenannten Schnellläuferspritzgießmaschinen im Einsatz, bei denen eine hohe Einspritzgeschwindigkeit erzielt werden muss. Diese Einspritzgeschwindigkeiten müssen insbesondere dann erzielt werden, wenn die Form geschlossen ist. Beim Schließen der Form selbst ist ein Betrieb der Einspritzeinrichtung zumeist nicht notwendig, so dass die Hydraulikquelle für den hydraulischen Antrieb oder die hydraulischen Antriebe der Schließeinheit verwendet werden kann.

In dieser Situation benötigt man lediglich sehr wenige zusätzliche Einheiten zu den bereits bestehenden Komponenten, nämlich einen handelsüblichen Hydraulikzylinder und ein einfaches Schaltventil, welches man an den bereits vorhandenen Akkumulator anschließt, um die entsprechende Kraftaufbringung zu realisieren. Eine Drossel dient evtl. dazu, beim Umschaltvorgang die Belastungsspitzen abzumildern.

Die vorliegende Erfindung lässt sich zusammen mit einer Vielzahl von herkömmlichen elektrischen Antrieben realisieren. Zum einen ist es möglich, die vorliegende Erfindung in Kombination mit einem an sich bekannten und über viele Jahre in bewährter Weise eingesetzten Kniehebelantrieb (z. B. 4-Punkt-Kniehebel oder 5-Punkt-Kniehebel) zu realisieren. Dazu muss an einem Pleuel des Kniehebels, welcher mit der beweglichen Aufspannplatte oder der Abstützplatte verbunden ist, der Hydraulikkolben angreifen. Beispielsweise kann der Hydraulikkolben zwischen einem Pleuel, welches sich von der Abstützplatte in Richtung Kreuzkopf erstreckt, angreifen, wobei der Hydraulikzylinder zwischen diesem Pleuel und der Abstützplatte zwischengeschaltet sein kann.

Andererseits lässt sich die Zwischenschaltung des zusätzlichen hydraulischen Antriebs auch zwischen einem Pleuel vornehmen, welches sich vom Kreuzkopf zu der beweglichen Aufspannplatte hin erstreckt. Hierbei wird der Hydraulikzylinder zwischen diesem Pleuel und der beweglichen Platte zwischengeschaltet und an diesen Elementen angelenkt.

Eine weitere Realisationsmöglichkeit ist im Zusammenhang mit einem an sich bekannten Kurbeltrieb (auch Z-Trieb) bekannt. Hierbei wird eine Kurbel drehangetrieben, die ein entsprechend mit der Abstützplatte oder der beweglichen Aufspannplatte angelenktes Pleuel betätigt. Je nach Drehbetätigung und -grad wird hier das Öffnen, Schließen oder Aufbringen der Schließkraft für die bewegliche Aufspannplatte erreicht. Dabei wird die Schließkraft in der Regel in der seitlichen Totpunktlage realisiert.

Solche Kurbelantriebe weisen vorzugsweise Pleuel auf, die sich einerseits zwischen der Abstützplatte und der Kurbeleinheit und andererseits zwischen der Kurbeleinheit und der beweglichen Aufspannplatte befindet. Wiederum kann hier der zusätzliche hydraulische Antrieb auf beide Pleuel einwirken. Bei der ersten Variante wirkt der zusätzliche hydraulische Antrieb zwischen der Abstützplatte und dem Pleuel erster Art und bei der zweiten Variante wirkt der zusätzliche hydraulische Antrieb zwischen dem Pleuel zweiter Art und der beweglichen Aufspannplatte.

Solche Systeme lassen sich auch vielfältig variieren. Beispielsweise können zwei Kurbeleinheiten mit der entsprechenden Anzahl von Pleueln versehen werden, wobei verschiedene Pleuel vorzugsweise in symmetrischer Art und Weise durch den hydraulischen Antrieb beaufschlagt werden.

Es ist aber auch möglich, den hydraulischen Antrieb derart zwischen zwei Pleuel zwischen zu schalten, dass bei einer Druckbeaufschlagung des hydraulischen Antriebs eine Verstärkung der Schließkraft dadurch erfolgt, dass die beiden Pleuel relativ zueinander auseinandergedrückt werden.

Weitere Ausführungsformen und Merkmale gehen aus den Ansprüchen hervor.

Die vorliegende Erfindung hat den Vorteil, dass der hydraulische Antrieb zusätzlich zum elektrischen Antrieb verwendet werden kann, und zwar ohne weitere mechanische Elemente, wie Verriegelungen, Einkoppelmechanismen, etc. Es findet also lediglich eine Überlagerung der beiden Kräfte aus den verschiedenen Antrieben statt, die sich hinsichtlich der Schließkraft oder auch der Aufreißkraft ergänzen.

Die vorliegende Erfindung soll nachfolgend mit Bezug auf die beiliegenden Zeichnungen hinsichtlich verschiedener Ausführungsformen näher erläutert werden. Die Zeichnungen zeigen in
- Fig. 1a: eine schematische Darstellung einer erfindungsgemäßen Schließeinheit mit einem Kurbelwellenantrieb in Geschlossen-Stellung,
- Fig. 1b: eine schematische Teil-Darstellung einer erfindungsgemäßen Schließeinheit mit einem Kurbelwellenantrieb in Offen-Stellung,
- Fig. 2: eine schematische Darstellung einer weiteren Ausführungsform einer erfindungsgemäßen Schließeinheit mit Kniehebel und einer ersten Anordnung der hydraulischen Zylinder,
- Fig. 3: eine schematische Darstellung einer weiteren Ausführungsform einer erfindungsgemäßen Schließeinheit mit Kniehebel und einer zweiten Anordnung der hydraulischen Zylinder,
- Fig. 4: eine schematische Darstellung einer weiteren Ausführungsform einer erfindungsgemäßen Schließeinheit mit Kniehebel und einer dritten Anordnung der hydraulischen Zylinder und
- Fig. 5: eine schematische Darstellung einer letzten Ausführungsform einer erfindungsgemäßen Schließeinheit mit Kniehebel, bei der die hydraulische Antriebseinheit zwischen zwei Pleuel zwischengeschaltet ist.

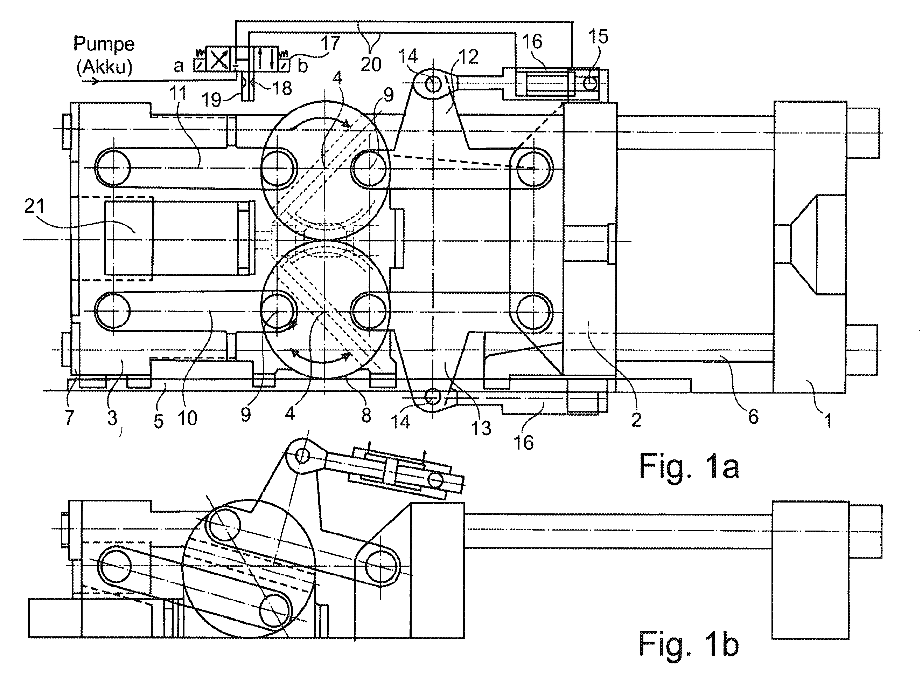

In den Figuren 1 a und 1 b ist eine erfindungsgemäße Schließeinheit mit einem an sich bekannten Z-Kurbelantrieb, hier einem Doppelkurbelantrieb dargestellt. Dabei zeigt Fig. 1 a die Schließeinheit in Geschlossen-Stellung und Fig. 1 b die obere hälfte der Schließeinheit in Offen-Stellung.

Diese Schließeinheit ist in der Regel in eine Spritzgießeinrichtung integriert und auf einem Maschinenbett gelagert. Insbesondere ist eine feste Formaufspannplatte 1 vorgesehen, die vorliegend fest mit dem Maschinenbett verbunden ist und an der sich eine Werkzeughälfte anordnen lässt. Auf dem (nicht dargestellten) Maschinenbett ist über Führungselemente 5 eine bewegliche Aufspannplatte 2 hin und her verschieblich aufgenommen, wobei in den Fig. 1a und 1b kein Formwerkzeug gezeigt ist. Am in Fig. 1a linken Ende befindet sich eine Abstützplatte 3, schwimmend auf dem Maschinenbett gelagert ist und zur Abstützung einer nachfolgend beschriebenen Antriebsvorrichtung dient, um unter entsprechender Kraftaufwendung die bewegliche Aufspannplatte hin und her zu verschieben und die Schließkraft aufzubringen.

Die Antriebseinrichtung besteht bei der Ausführungsform in den Fig. 1 a und 1 b aus zwei parallel zueinander angeordneten und wirkenden Kurbelantrieben mit jeweils einer Kurbeleinheit 4 (Kurbelscheibe), Pleuel erster Art 11, die jeweils an der Abstützplatte 3 und der Kurbelscheibe angelenkt sind, sowie Pleuel zweiter Art 12 und 13, die jeweils zwischen den Kurbelscheiben 4 und der beweglichen Aufspannplatte 2 in der in Fig. 1a gezeigten Form angelenkt sind. Je nach Konstruktion können die Kurbeln auch doppelt ausgeführt sein.

Die Kurbeleinheiten 4 weisen jeweils Zahnräder auf, an denen eine Schneckenantriebswelle 8 eines Elektromotors 21 kämmt. Dabei sind die Zahnungen der Zahnräder so ausgeführt, dass beim Betrieb des Antriebsmotors 21 über die Schneckenantriebswelle 8 die beiden Kurbeleinheiten 4 in entgegengesetzter Drehrichtung beaufschlagt werden und je nach Drehrichtung in entsprechender Weise die bewegliche Aufspannplatte verschieben. Dabei ist in Fig. 1a in der seitlichen, äußeren Totpunktlage die Schließstellung erreicht. In der Fig. 1b ist die maximale Öffnungsstellung gezeigt. Eine evtl. notwendige Werkzeughöhenverstellung kann dabei über vier Muttern 7 erfolgen, welche mit Holmen 6 zusammenwirken, die die Abstützplatte und die feste Aufspannplatte miteinander verbinden und auf denen evtl. die bewegliche Aufspannplatte geführt ist.

An den beiden Pleueln zweiter Art 12 und 13 sind über Laschen jeweils seitlich versetzt Anlenkpunkte 14 realisiert, zwischen denen und entsprechenden Anlenkpunkten an den beweglichen Aufspannplatten 15 jeweils ein Hydraulikantrieb 16 mit einem Hydraulikzylinder und einem Hydraulikkolben vorgesehen sind. Der Hydraulikzylinder und der Hydraulikkolben des Hydraulikantriebs sind dabei doppeltwirkend ausgebildet, so dass der Hydraulikantrieb sowohl auf Druck wie auch auf Zug beaufschlagt werden kann.

Jeder doppeltwirkende Hydraulikantrieb 16 ist über Hydraulikleitungen mit einem Ventil verbunden, welches vorliegend als einfaches 3-Wege-Schaltventil ausgebildet ist, mit dem sich die Hydraulikantriebe 16 in die eine Betätigungsrichtung, in die andere Betätigungsrichtung sowie im Leerlauf schalten lassen.

Ein Eingang des Hydraulikventils 17 ist dabei mit einem Akkumulator eines Antriebssystems für die (nicht dargestellte) Einspritzeinheit verbunden.

Andererseits ist der Ausgang des 3-Wege-Schaltventils über eine Drossel mit einem Rückflussbehälter oder Tank verbunden. Je nach Schaltung des Ventils können die Hydraulikantriebe damit entweder im Leerlauf geschaltet oder in eine der beiden Betriebsrichtungen beaufschlagt werden.

Durch die Anlenkung des Hydraulikantriebs jeweils an dem versetzten Anlenkpunkt 14 können nun die Laschen um den Drehpunkt der Pleueln 12 und 13 mit der beweglichen Aufspannplatte 12 bewegt werden, so dass durch eine entsprechende Beaufschlagung der Hydraulikantriebe 16 der durch den Elektromotor bewirkte Drehantrieb der Kurbelscheiben 4 unterstützt werden kann. Dabei hat sich bei einer Berechnung herausgestellt, dass der Elektromotor 21 bei entsprechender Auslegung die Verfahrbewegung bis ca. 6° vor der Totpunktstellung durchführen kann. Dann beginnt der Schließkraftaufbau. Lediglich für den Bereich des Schließkraftaufbaus, also die letzten 6° bis zur Totpunktstellung ist eine zusätzliche Beaufschlagung mit den vorgenannt beschriebenen Hydraulikantrieben notwendig. Dabei liegt das Antriebsmaximum beispielsweise bei 2-3° vor der Totpunktstellung je nach Geometrie.

Die Hydraulikantriebe können dabei sowohl zum Aufbringen der Schließkraft wie auch zum Aufreißen des Formwerkzeugs beim Öffnen des Formwerkzeugs verwendet werden. In den übrigen Betätigungsphasen können die Hydraulikkolben in den Leerlauf geschaltet werden, so dass sie ohne jegliche Krafteinwirkung "mitfahren". Dabei müssen kaum Mengen an Hydraulikfluiden bewegt werden.

Der Vorteil der in den Figuren 1a und 1 b gezeigten Konstruktion liegt dabei darin, dass beim Betrieb des hydraulischen Antriebs der Elektromotor 21 nicht zusätzlich belastet wird, sondern vielmehr entlastet wird, so dass sich die jeweiligen Kräfte vollständig ergänzen.

Dies hat den Vorteil, dass kleinere Elektromotoren für die Betätigung der Schließeinheit verwendet werden können, aber auch die Auslegung der Getriebe kann schwächer gewählt werden. Bei einer entsprechenden Auslegung der hydraulischen Antriebe lassen sich so Reduktionen beim elektrischen Antrieb im Bereich um 50 % erreichen. Dies führt dazu, dass auch mit kleineren elektrischen Antrieben Schließeinheiten mit großer Schließkraft realisiert werden können. War aus wirtschaftlichen Gründen heute die Schließkraft bei rein elektrisch angetriebenen Schließeinheiten auf 600 - 800 to Schließkraft begrenzt, so können mit der vorliegenden Ausführungsform ohne großen Aufwand Schließkräfte bis 1.500 to und darüber hinaus erreicht werden.

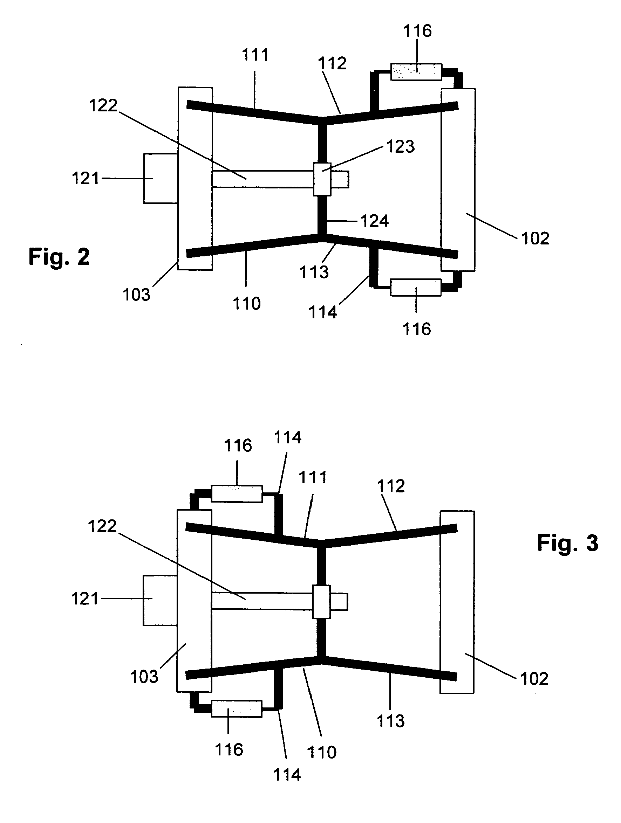

Dass die vorliegende Erfindung auch mit einer Vielzahl anderer bisher rein elektrischen Antrieben gekoppelt werden kann, geht aus den weiteren Figuren 2 - 5 hervor, die lediglich in rein schematischer Darstellung und unter Weglassung von zum Verständnis der Erfindung nicht notweniger Details den Grundgedanken der vorliegenden Erfindung beschreiben.

So ist in Fig. 2 eine Kniehebelschließeinheit mit einer beweglichen Aufspannplatte 102, einer Abstützplatte 103 und einem dazwischen angeordneten (hier) 4-Punkt-Kniehebel dargestellt. Dieser 4-Punkt-Kniehebel umfasst Laschen erster Art 110 und 111 zwischen der Abstützplatte 103 einerseits und einem Kreuzkopf 123 andererseits sowie Pleuel zweiter Art 112, 113 zwischen dem Kreuzkopf einerseits und der beweglichen Aufspannplatte andererseits. Zwischen dem Kreuzkopf 123 und den beiden Laschen erster 110, 111 und zweiter Art 112, 113 sind noch Verbindungslaschen 124 vorgesehen. In an sich vielfach bekannter Weise wird durch den Antrieb einer Spindel-Mutter-Kombination der Kreuzkopf 123 hin und her bewegt, wodurch bei entsprechender Verschiebung der Pleuel sich auch die bewegliche Aufspannplatte bewegt. Vorliegend ist an der Abstützplatte 103 ein Elektromotor 121 angeordnet, der eine Antriebsspindel 122 drehantreibt. Diese bewirkt im Zusammenspiel mit einer fest im Kreuzkopf 123 angeordneten Mutter die Betätigung des Kniehebels. Diese Technik ist hinlänglich bekannt.

Zusätzlich zu dem Antrieb des Kniehebels über den Elektromotor können nun einzelne Pleuel parallel mit Kraft beaufschlagt werden. In der Ausführungsform gem. Fig. 2 ist dies dadurch erreicht, dass zwischen den beiden Pleueln zweiter Art 112 und 113 und der beweglichen Aufspannplatte in analoger Weise wie auch bei der Ausführungsform in Fig. 1a und 1b jeweils hydraulische Antriebe mit Zylinder und Kolben vorgesehen sind, die in gewünschter Weise eine entsprechende zusätzliche Kraft auf diese Pleuel 112 und 113 aufbringen können. Auch hier addiert sich die Kraft über den elektrischen Antrieb 121 auf den Kniehebel 123 mit der Kraft über die hydraulischen Antriebe 116 da sie in gleicher Weise auf die jeweiligen Pleuel wirken und auch hier bedarf es keiner mechanischen Verriegelung oder sonstigen Aktion, um von einer Öffnungs- oder Schließbewegung zu einer Aufbringung der Schließkraft umzuschalten. Vielmehr kann die zusätzliche Kraft über die zusätzlichen hydraulischen Antriebe einfach zugeschaltet werden.

Die Ausführungsform in Fig. 3 unterscheidet sich von derjenigen in Fig. 2 lediglich dadurch, dass die hydraulischen Antriebe 116 nun zwischen den Pleueln erster Art 110 und 111 und der Abstützplatte 103 angeordnet sind. Ansonsten ist die wirkungs- und betriebweise analog zu der Ausführungsform in Fig. 2

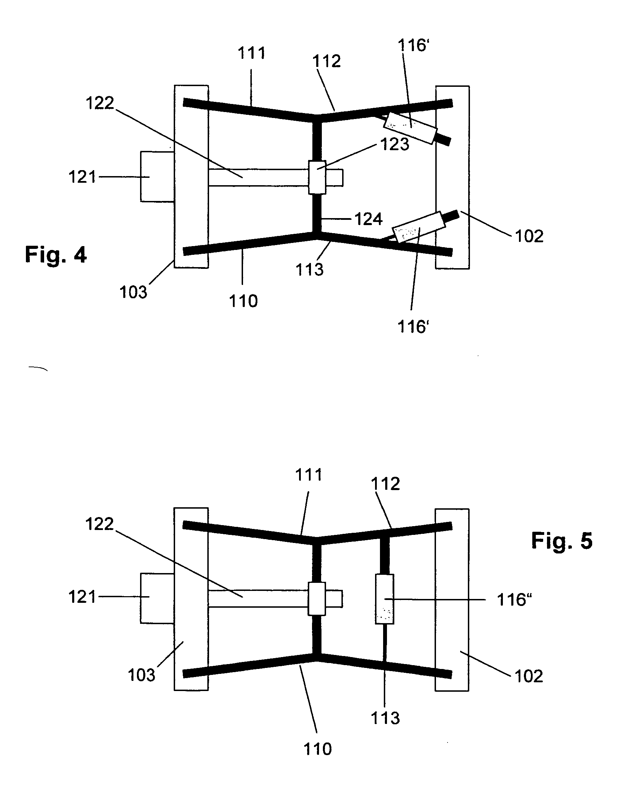

Bei der Ausführungsform in Fig. 4 ist gegenüber derjenigen in Fig. 2 eine andere Anordnung der Hydraulikzylinder 116' jeweils zwischen den Pleueln 112 und 113 gewählt.

Die Ausführungsform in Fig. 5 zeigt, dass der oder die hydraulischen Antriebe nicht zwangsweise an der Abstützplatte 103 oder der beweglichen Aufspannplatte 102 angelenkt werden müssen. Es ist auch möglich, den hydraulischen Antrieb unmittelbar zwischen zwei Pleuel einzufügen (hier zwischen die beiden Pleuel zweiter Art 112 und 113) und durch einen entsprechenden Betrieb des hydraulischen Antriebs 116" die beiden Pleuel 112 und 113 auseinanderzudrücken, wodurch diese Kraft wiederum die durch den Motor 121 aufgebrachte Kraft ergänzt.

Insgesamt lässt sich mit der vorliegenden Erfindung eine Schließeinheit realisieren, die auf der einen Seite die Vorteile der elektrischen Antriebe nutzt und auf der anderen Seite eine Realisierung von Schließeinheiten für hohe Schließdrücke zulässt, ohne dass die Kosten übermäßig ansteigen. Damit lassen sich die Getriebe, die Antriebsmotore und die Umrichter der bisherigen elektrischen Antriebseinheiten in ihrer Auslegung entsprechend reduzieren und die hohen Verriegelungsmomente belasten die Getriebeeinheit nicht selbst. Die Folgen sind daher neben niedrigen Kosten auch eine höhere Lebensdauer und ein geringerer Verschleiß der Komponenten des elektrisch betriebenen Teils des Antriebs.

### Bezugszeichenliste

- 1: Feststehende Formaufspannplatte
- 2: Bewegliche Formaufspannplatte
- 3: Abstützplatte
- 4: Kurbelscheibe
- 5: Führungselement für bewegliche Formaufspannplatte
- 6: Holme
- 7: Gelagerte Mutter
- 8: Schneckenantriebswelle
- 9: Anlenkung Lasche Kurbelscheibe
- 10, 11: Pleuel erster Art
- 12, 13: Pleuel zweiter Art
- 14: Versetzter Anlenkpunkt an den Laschen zweiter Art
- 15: Anlenkpunkt an der beweglichen Aufspannplatte
- 16: Hydraulikantrieb mit Zylinder und Kolben
- 17: Ventil
- 18: Drossel
- 19: Behälter
- 20: Hydraulikleitungen
- 21: Elektromotor

- 102: Bewegliche Aufspannplatte
- 103: Abstützplatte
- 110,111: Pleuel erster Art
- 112, 113: Pleuel zweiter Art
- 114: Versetzter Anlenkpunkt
- 116: Hydraulikantrieb mit Zylinder und Kolben
- 121: Elektromotor
- 122: Antriebspindel
- 123: Kreuzkopf mit Mutter
- 124: Verbindungslasche

## Patentansprüche

1. Schließeinheit für eine Spritzgießmaschine umfassend
- eine bewegliche Aufspannplatte (2),
- eine Abstützplatte (3) sowie
- eine zwischen der beweglichen Aufspannplatte (2) und der Abstützplatte (3) wirkende Antriebseinrichtung, welche zumindest einen Elektromotor (21, 121) und zumindest ein Pleuel (10 - 13; 110 -113) aufweist, wobei der Elektromotor (21, 121) das oder die Pleuel (10 - 13; 110 - 113) zum Öffnen, Schließen und/oder Aufbringen der Schließkraft mittelbar oder unmittelbar beaufschlagt,
**dadurch gekennzeichnet, dass**
zusätzlich zu dem Elektromotor (21, 121) zumindest ein gesonderter hydraulischer Antrieb (116, 116', 116") vorgesehen ist, der gesondert an einem Pleuel angelenkt ist und parallel und unabhängig zum Elektromotor zumindest zeitweise zum Öffnen, Schließen und/oder Aufbringen der Schließkraft wirkt.

2. Schließeinheit nach Anspruch 1,
**dadurch gekennzeichnet**,
der hydraulische Antrieb (116, 116', 116") einerseits an einem Pleuel und andererseits an der Abstützplatte (103) und/oder an der beweglichen Aufspannplatte (102) und/oder an einem anderen Pleuel angelenkt ist und zumindest zeitweise zum Öffnen, Schließen und/oder Aufbringen der Schließkraft wirkt.

3. Schließeinheit nach Anspruch 1 oder 2,
**dadurch gekennzeichnet,**
**dass** für den hydraulischen Antrieb ein Hydraulikkolben und ein Hydraulikzylinder vorgesehen sind.

4. Schließeinheit nach Anspruch 1 bis 3,
**dadurch gekennzeichnet,**
**dass** der Hydraulikkolben und der Hydraulikzylinder doppeltwirkend ausgebildet sind.

5. Schließeinheit nach einem der vorhergehenden Ansprüche,
**dadurch gekennzeichnet,**
**dass** der Hydraulikzylinder über ein schaltbares Ventil mit einer Hydraulikversorgungseinrichtung verbunden ist.

6. Schließeinheit nach Anspruch 5,
**dadurch gekennzeichnet,**
**dass** es sich bei dem Ventil um ein Schaltventil handelt.

7. Schließeinheit nach Anspruch 6,
**dadurch gekennzeichnet,**
**dass** zwischen dem Ventil und einem Rücklaufbehälter eine Drossel vorgesehen ist.

8. Schließeinheit nach einem der Ansprüche 5 bis 7,
**dadurch gekennzeichnet,**
**dass** die Hydraulikversorgungseinrichtung einen Akkumulator aufweist.

9. Schließeinheit nach einem der vorhergehenden Ansprüche,
**dadurch gekennzeichnet,**
**dass** die Antriebseinrichtung einen Kniehebelantrieb mit einer Spindel-Mutter Kombination (122, 123) umfasst, wobei die Spindel (122) oder die Mutter (123) von dem Elektromotor (121) angetrieben ist.

10. Schließeinheit nach Anspruch 9,
**dadurch gekennzeichnet,**
**dass** der Kniehebel einen Kreuzkopf umfasst, dass zumindest ein Pleuel erster Art (110, 111) vorgesehen ist, welches zwischen der Abstützplatte (103) und dem Kreuzkopf vorgesehen ist und zumindest ein Pleuel zweiter Art (112, 113) vorgesehen ist, welches zwischen dem Kreuzkopf und der beweglichen Aufspannplatte (102) vorgesehen ist.

11. Schließeinheit nach Anspruch 10,
**dadurch gekennzeichnet,**
**dass** der hydraulische Antrieb (116) zwischen der Abstützplatte (103) und dem Pleuel erster Art (110, 111) vorgesehen ist.

12. Schließeinheit nach Anspruch 10 oder 11,
**dadurch gekennzeichnet,**
**dass** der hydraulische Antrieb zwischen dem Pleuel zweiter Art (112, 113) und der beweglichen Aufspannplatte (102) vorgesehen ist.

13. Schließeinheit nach einem der Ansprüche 1 bis 8,
**dadurch gekennzeichnet,**
**dass** die Antriebseinrichtung eine drehbar angetriebene Kurbeleinheit (4) umfasst, die zumindest ein Pleuel (10 - 13) umfasst, welches zwischen der Kurbeleinheit (4) einerseits und entweder der Abstützplatte (103) oder der beweglichen Aufspannplatte (102) andererseits angeordnet ist.

14. Schließeinheit nach Anspruch 13,
**dadurch gekennzeichnet,**
**dass** ein Pleuel erster Art (10, 11) zwischen der Abstützplatte (103) und der drehbar angetriebenen Kurbeleinheit (4) sowie ein Pleuel zweiter Art (11, 13) zwischen der drehbar angetriebenen Kurbeleinheit (4) und der beweglichen Aufspannplatte (102) angeordnet ist.

15. Schließeinheit nach einem der Ansprüche 13 und 14
**dadurch gekennzeichnet,**
**dass** zwei Kurbeleinheiten (4) vorgesehen sind, die über einen einzigen oder zwei separate elektrische Antriebe angetrieben sind.

## Claims

1. A clamping unit for an injection moulding machine, comprising
- a movable clamping plate (2),
- a support plate (3) and
- a drive device acting between the movable clamping plate (2) and the support plate (3), which drive device has at least one electric motor (21, 121) and at least one connecting rod (10-13; 110-113), wherein the electric motor (21, 121) acts indirectly or directly on the connecting rod(s) (10-13; 110-113) for opening, closing and/or applying the clamping force,
**characterized in that**
in addition to the electric motor (21, 121) at least one separate hydraulic drive (116, 116', 116") is provided, which is articulated separately on a connecting rod and acts in parallel and independently of the electric motor at least at times for opening, closing and/or applying the clamping force.

2. The clamping unit according to Claim 1,
**characterized in that**
the hydraulic drive (116, 116', 116") is articulated on the one hand on a connecting rod and on the other hand on the support plate (103) and/or on the movable clamping plate (102) and/or on another connecting rod and acts at least at times for opening, closing and/or applying the clamping force.

3. The clamping unit according to Claim 1 or 2,
**characterized in that**
a hydraulic piston and a hydraulic cylinder are provided for the hydraulic drive.

4. The clamping unit according to Claim 1 to 3,
**characterized in that**
the hydraulic piston and the hydraulic cylinder are constructed so as to be double-acting.

5. The clamping unit according to one of the preceding claims,
**characterized in that**
the hydraulic cylinder is connected with a hydraulic supply device via a switchable valve.

6. The clamping unit according to Claim 5,
**characterized in that**
the valve is a switchover valve.

7. The clamping unit according to Claim 6,
**characterized in that**
a throttle is provided between the valve and a return flow container.

8. The clamping unit according to one of Claims 5 to 7,
**characterized in that**
the hydraulic supply device has an accumulator.

9. The clamping unit according to one of the preceding claims,
**characterized in that**
the drive device comprises a bent lever drive with a spindle-nut combination (122, 123), wherein the spindle (122) or the nut (123) is driven by the electric motor (121).

10. The clamping unit according to Claim 9,
**characterized in that**
the bent lever comprises a crosshead, that at least one connecting rod of the first type (110, 111) is provided, which is provided between the support plate (103) and the crosshead, and at least one connecting rod of the second type (112, 113) is provided, which is provided between the crosshead and the movable clamping plate (102).

11. The clamping unit according to Claim 10,
**characterized in that**
the hydraulic drive (116) is provided between the support plate (103) and the connecting rod of the first type (110, 111).

12. The clamping unit according to Claim 10 or 11,
**characterized in that**
the hydraulic drive is provided between the connecting rod of the second type (112, 113) and the movable clamping plate (102).

13. The clamping unit according to one of Claims 1 to 8,
**characterized in that**
the drive device comprises a rotatably driven crank unit (4), which comprises at least one connecting rod (10-13), which is arranged between the crank unit (4) on the one hand and either the support plate (103) or the movable clamping plate (102) on the other hand.

14. The clamping unit according to Claim 13,
**characterized in that**
a connecting rod of the first type (10, 11) is arranged between the support plate (103) and the rotatably driven crank unit (4), and a connecting rod of the second type (11, 13) is arranged between the rotatably driven crank unit (4) and the movable clamping plate (102).

15. The clamping unit according to one of Claims 13 and 14,
**characterized in that**
two crank units (4) are provided, which are driven via a single electric drive or via two separate electric drives.

## Revendications

1. Unité de fermeture pour presse d'injection comprenant
- une plaque de serrage mobile (2),
- une plaque d'appui (3), ainsi
- qu'un dispositif d'entraînement agissant entre la plaque de serrage mobile (2) et la plaque d'appui (3), lequel présente au moins un moteur électrique (21, 121) et au moins une bielle (10 - 13 ; 110 - 113), sachant que le moteur électrique (21, 121) alimente directement ou indirectement la ou les bielle ( s ) (10 - 13 ; 110 - 113) pour ouvrir, fermer et/ou appliquer la force de fermeture,
**caractérisée en ce qu'**en plus du moteur électrique (21, 121), au moins un entraînement hydraulique séparé (116, 116', 116") est prévu, lequel est articulé de manière séparée sur une bielle et agit parallèlement au, et indépendamment du, moteur électrique, au moins par intermittence, pour ouvrir, fermer et/ou appliquer la force de fermeture.

2. Unité de fermeture selon la revendication 1, **caractérisée en ce que** l'entraînement hydraulique (116, 116', 116") est articulé d'une part sur une bielle et d'autre part sur la plaque d'appui (103) et/ou sur la plaque de serrage mobile (102) et/ou sur une autre bielle et agit au moins par intermittence pour ouvrir, fermer et/ou appliquer la force de fermeture.

3. Unité de fermeture selon la revendication 1 ou 2, **caractérisée en ce qu'**un piston hydraulique et un cylindre hydraulique sont prévus pour l'entraînement hydraulique.

4. Unité de fermeture selon l'une des revendications 1 à 3, **caractérisée en ce que** le piston hydraulique et le cylindre hydraulique sont conçus pour agir en double.

5. Unité de fermeture selon l'une des revendications précédentes, **caractérisée en ce que** le cylindre hydraulique est relié à un dispositif d'alimentation hydraulique via un clapet commutable.

6. Unité de fermeture selon la revendication 5, **caractérisée en ce que** le clapet est une soupape de commande.

7. Unité de fermeture selon la revendication 6, **caractérisée en ce qu'**un dispositif d'étranglement est prévu entre le clapet et un réservoir à retour.

8. Unité de fermeture selon l'une des revendications 5 à 7, **caractérisée en ce que** le dispositif d'alimentation hydraulique présente un accumulateur.

9. Unité de fermeture selon l'une des revendications précédentes, **caractérisée en ce que** le dispositif d'entraînement comprend un entraînement à genouillère avec une combinaison broche-écrou (122, 123), sachant que la broche (122) ou l'écrou (123) est entraîné(e) par le moteur électrique (121).

10. Unité de fermeture selon la revendication 9, **caractérisée en ce que** la genouillère comprend une crosse, qu'au moins une bielle de premier type (110, 111) est prévue, laquelle est prévue entre la plaque d'appui (103) et la crosse et qu'au moins une bielle de deuxième type (112, 113) est prévue, laquelle est prévue entre la crosse et la plaque de serrage mobile (102).

11. Unité de fermeture selon la revendication 10, **caractérisée en ce que** l'entraînement hydraulique (116) est prévu entre la plaque d'appui (103) et la bielle de premier type (110, 111).

12. Unité de fermeture selon la revendication 10 ou 11, **caractérisée en ce que** l'entraînement hydraulique est prévu entre la bielle de deuxième type (112, 113) et la plaque de serrage mobile (102).

13. Unité de fermeture selon l'une des revendications 1 à 8, **caractérisée en ce que** le dispositif d'entraînement comprend une unité de manivelle (4) entraînée de manière rotative qui comprend au moins une bielle (10 - 13) qui est disposée entre l'unité de manivelle (4) d'une part et soit la plaque d'appui (103), soit la plaque de serrage mobile (102), d'autre part.

14. Unité de fermeture selon la revendication 13, **caractérisée en ce qu'**une bielle de premier type (10, 11) est disposée entre la plaque d'appui (103) et l'unité de manivelle (4) entraînée de manière rotative, et une bielle de deuxième type (112, 113) est disposée entre l'unité de manivelle (4) entraînée de manière rotative et la plaque de serrage mobile (102).

15. Unité de fermeture selon l'une des revendications 13 et 14, **caractérisée en ce que** deux unités de manivelle (4) sont prévues, qui sont entraînées par un seul ou deux entraînement(s) électrique(s) séparés.
